# NEUE EUROPÄISCHE PATENTSCHRIFT

(11) **EP 0 297 616 B2**
(45) Veröffentlichungstag und Bekanntmachung des Hinweises auf die Entscheidung über den Einspruch: **12.02.2003**
(45) Hinweis auf die Patenterteilung: 22.09.1993
(21) Anmeldenummer: 88110582.9
(22) Anmeldetag: 01.07.1988
(51) Int. Cl.: H04Q 7/32, H04Q 7/38, H04B 1/38

(54) **Rechnergesteuertes Funkteilnehmergerät**
Computerized subscriber radio equipment
Equipement d'abonné radio à commande par processeur

(30) Priorität: 02.07.1987 DE 3721889
(43) Veröffentlichungstag der Anmeldung: 04.01.1989
(73) Patentinhaber: Alcatel SEL Aktiengesellschaft, 70435 Stuttgart (DE)
(72) Erfinder: Böhm, Manfred, Dr., D-7000 Stuttgart 31 (DE); Diederich, Hans G., D-6100 Darmstadt (DE); Logemann, Helmut, D-6100 Darmstadt (DE)
(74) Vertreter: Kugler, Hermann, Dipl.-Phys.

(56) Entgegenhaltungen:
- EP-A- 0 111 973
- WO-A-82/01268
- DE-A- 3 314 557
- DE-A1- 3 444 989
- US-A- 4 677 653
- GRUNDIG TECHNISCHE INFORMATION, Nr. 2/3, 1985, Seiten 153-159, Fürth, DE: G. HEROLD: "Das Betriebsfunkgerät FK 105"
- EIA INTERIM STANDARD, IS-3-D, März 1987, Vorwort, Seiten 2-7 bis 2-13
- EIA INTERIM STANDARD, IS-3-D, März 1987, Vorwort, Seiten, i bis iv und 1-2 bis 6-2
- EIA INTERIM STANDARD, IS-3-D, März 1987, Vorwort, Seiten, i bis iv und 1-2 bis 6-2

## Beschreibung

Die Erfindung betrifft ein Funkteilnehmergerät zum Betrieb in Mobilfunknetzen mit unterschiedlicher Systemtechnik.

### Stand der Technik

Häufig werden Mobilfunknetze benachbarter Fernmeldeverwaltungen im selben Frequenzbereich betrieben. Die erforderlichen Hochfrequenz-Baugruppen der Mobilfunkgeräte unterscheiden sich in diesem Fall nicht oder nur unwesentlich. Große Unterschiede bestehen dagegen bei den speziellen Funktionsabläufen wie z.B. "Einbuchen" und "Verbindungsaufbau". Da diese Funktionsabläufe in sich schon sehr komplex sind, werden moderne Mobilfunkgeräte mikroprozessorgesteuert. Das Verhalten der Geräte ist durch die in Speicherbausteinen (PROM) enthaltene Systemsoftware festgelegt.

Andererseits existieren mehrere Funknetze des öffentlich beweglichen Landfunkdienstes. Nur wenige dieser Mobilfunknetze erlauben einen grenzüberschreitenden Funkbetrieb. In einigen Ländern sind darüber hinaus mehrere Mobilfunknetze mit voneinander abweichenden Systemtechniken und Frequenzbereichen installiert.

*Aus WO 82*/*01268 ist ein Funkteilnehmergerät, nämlich ein Funkrufempfänger, bekannt. Dieser Funkrufempfänger kann unterschiedliche Nachrichtenformate (ECHO oder POCSAG) dekodieren. Dazu sind Auswahlmittel einem Dekodierer und einem Detektor nachgeschaltet, die anhand einer Suchroutine eines von mehrerenDekodier-Schemen auswählen. Die Auswahlmittel prüfen, ob das ausgewählte Kodier-Schema geeignet ist, um die empfangene, kodierte Nachricht für den Bentzer zu dekodieren. Ist dies nicht der Fall, wird ein nächstes Dekodier-Schema getestet. Demnach kann das aus WO 82*/*01268 bekannte Funkteilnehmergerät nur dann arbeiten, wenn das empfangene Funksignal bereits eine für den Benutzer kodierte Nachricht enthält.*

Bekannt sind Mobilfunkgeräte für zellulare Netze (US-A-4,677,653), die einen Zugang zu mehreren Netzbetreibern dadurch ermöglichen, daß das Gerät über mehrere Nummern verfügt, von denen jede einem Betreiber zugeordnet ist.

Weiterhin ist es für Sprechfunkgeräte bekannt (DE-A-33 14 557) parallel eine Vielzahl von Rufnummern zur Verfügung zu stellen. Darüber hinaus ist eine Anpassung an eine andere Norm durch Austauschen des Mikroprozessors möglich.

Aus DE 34 44 989 A1 ist ein Funkteilnehmergerät bekannt, welches zwei Funkteile enthält, und zwar einen für UHF und einen für VHF. Das Teilnehmerendgerät ist zum Einsatz in einem einheitlichen Funksystem vorgesehen. Es ist eine Steuerung vorhanden, die beide Funkteile überwacht um nach Möglichkeit Kanäle im UHF-Bereich zu belegen und zu gewährleisten, daß Kanäle im VHF-Bereich nur dann belegt werden, wenn keine hochfrequenten UHF-Kanäle belegbar sind.

### Nachteile der bisherigen Lösungen

Die Funkschnittstellen zwischen Mobilfunkgerät und Mobilfunknetzen sind weitgehend inkompatibel, so daß Mobilfunkgeräte des Mobilfunknetzes eines Landes häufig nicht im Mobilfunknetz des Nachbarlandes betrieben werden können. Legt der Kunde Wert auf fortwährende Erreichbarkeit in beiden Ländern, ist er gezwungen, für jedes nationale Mobilfunknetz ein eigenes, spezielles Mobilfunkgerät zu erwerben und mit sich zu führen.

Kompatibilität ist auch dann nicht gewährleistet, wenn eine Fernmeldeverwaltung wegen Erreichen der Kapazitätsgrenze eines älteren beispielsweise eines analogen FDMA-Netzes ein Nachfolgenetz beispielsweise ein digitales TDMA-Netz, meist mit verbesserten Leistungsmerkmalen und in einem anderen Frequenzbereich, beginnt aufzubauen. Wünscht der Kunde volle Flächendeckung (im alten Netz vorhanden), muß er auf die erweiterten Leistungsmerkmale des neuen, moderneren Netzes verzichten. Nimmt er diese in Anspruch, ist er von der flächendeckenden Gesamtversorgung des älteren Netzes ausgeschlossen.

Daraus ergibt sich der Zwang für Fernmeldeverwaltungen, beim Aufbau neuer Mobilfunknetze frühzeitig volle Flächendeckung anzustreben, noch ehe diese Netze den Versuchs- und Erprobungsstatus verlassen haben. Unerfüllte Erwartungen und wirtschaftliche Nachteile, bedingt durch erforderliche Nachbesserungen, sind die Folge für Netzbetreiber und Kunden.

### Aufgabe

Der Erfindung liegt die Aufgabe zugrunde, Funkteilnehmergeräte zu schaffen, die in mehreren Mobilfunknetzen, insbesondere mit unterschiedlicher Systemtechnik, mit unterschiedlichen Frequenzbereichen und unterschiedlichen Übertragungsverfahren betrieben werden können und die den Kunden von daraus resultierenden Bedienungsverrichtungen weitgehend entlasten.

*Diese Aufgabe wird bei einem rechnergesteuerten Funkteilnehmergerät, gemäß den Merkmalen des Anspruch 1 gelöst.*

*Zur Auswahl der Speicherbereiche wird durch eine vom Empfänger des Teilnehmergerätes angesteuerte Auswerteeinrichtung das Auswahlkriterium aus der Qualität des Kontaktes zum Mobilfunknetz abgeleitet.*

Bei Funkteilnehmergeräten, die mit Mobilfunknetzen zusammenarbeiten sollen, die unterschiedliche Freqenzbereiche haben, ist es vorteilhaft, den HF-Teil einfach auswechselbar zu machen.

### Vorteile

Mit den erfindungsgemäßen Mobilfunkgeräten ist ein uneingeschränkter grenzüberschreitender Betrieb möglich unabhängig davon, ob die Netze der Fernmeldeverwaltungen systemtechnisch und frequenzmäßig kompatibel sind oder nicht. Der Kunde braucht nur ein einziges Mobilfunkgerät mit sich zu führen. Die Kompatibilität ist damit von der Funkschnittstelle Mobilfunkgerät - Mobilfunknetz in das Mobilfunkgerät hinein verlegt worden. Die Fernmeldeverwaltungen sind nicht mehr gezwungen, modernere Mobilfunknetze übereilt flächendeckend aufzubauen, noch bevor der Probebetrieb erfolgreich abgeschlossen wurde. Die Gefahr von Fehlinvestitionen wird für Netzbetreiber und Kunde geringer, ohne daß letzterer auf moderne Leistungsmerkmale, dort wo angeboten, oder auf volle Flächendeckung verzichten muß.

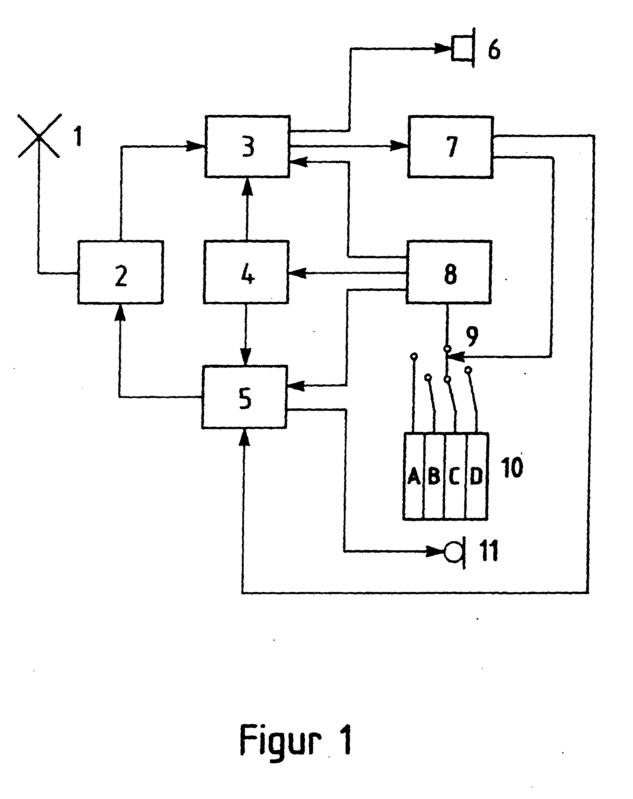

Im folgenden wird die Erfindung anhand eines Ausführungsbeispiels aus dem Bereich des Mobilfunktelefons näher erläutert. Die Fig. 1 zeigt ein Blockschaltbild eines Mobilfunktelefons nach der Erfindung.

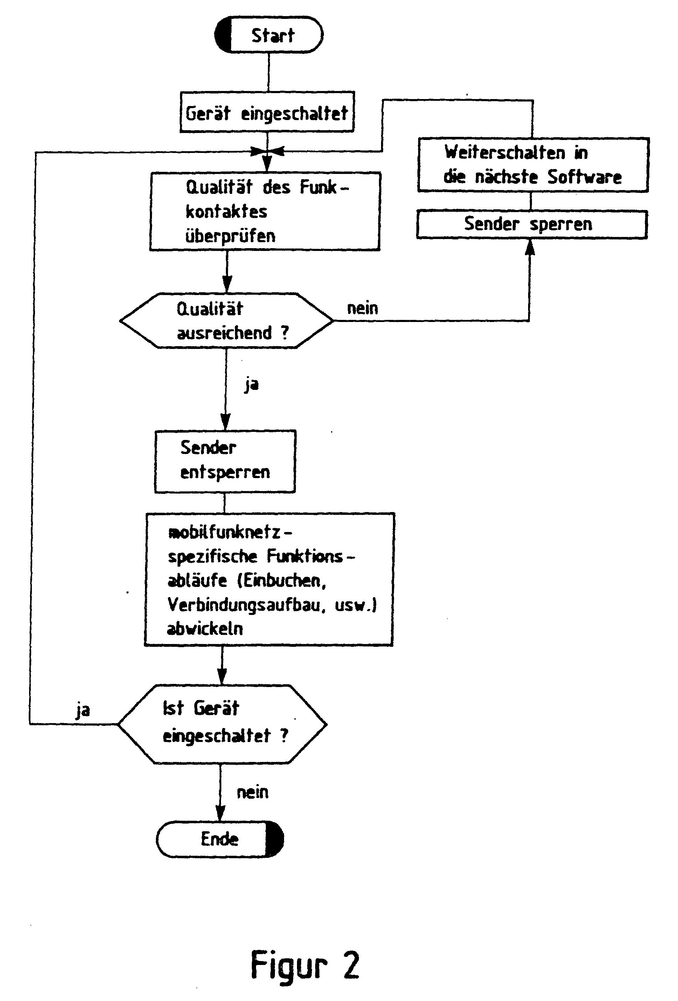

Das zugehörige Flußdiagramm ist in der Fig. 2 dargestellt.

Die Fig. 1 zeigt ein aus der Antenne 1, der Duplexweiche 2, dem Empfänger 3 mit der nachgeschalteten Hörkapsel 6, dem Frequenzsynthesizer 4 und dem Sender 5 mit vorgeschalteter Sprechkapsel 11 bestehende Mobilfunkstation, die von einem Mikroprozessor 8 gesteuert wird.

Am Empfängerausgang liegt eine Auswerteeinrichtung 7, die einen Umschalter 9 steuert, der eine Anzahl von Speicherbereichen 10 wahlweise an den Mikroprozessor 8 schaltet. Das Mobilfunkgerät enthält auf diese Weise die Software A - D mehrerer, sich in der Systemtechnik unterscheidender Mobilfunknetze. Nur jeweils eine Software ist aktiviert - angedeutet durch die Stellung des Umschalters, im Beispiel ist die Software des Mobilfunknetzes C aktiviert.

Der Empfänger 3 möge jetzt eine zu geringe Feldstärke im Mobilfunknetz C feststellen siehe (Fig. 2). Er gibt ein entsprechendes Signl an die Auswerteeinrichtung 7 weiter, die den Sender 5 sperrt und ein Weiterschalten des Schalter 9 und damit eine Änderung der Arbeitsweise des Mikroprozessors 8 veranlaßt ("Systemsuchlauf") siehe (Fig. 2), bis der Empfänger 3, gesteuert durch Milroprozessor 8 und Frequenzsynethesizer 4, ein den Qualitätsanforderungen entsprechendes Mobilfunknetz "gefunden" hat. Der "Systemsuchlauf", veranlaßt durch Auswerteeinrichtung 7, wird beendet, der Sender 5 entsperrt sieh (Fig. 2). Das Mobilfunkgerät befindet sich wieder im betriebsbereiten Zustand.

Soll das Mobilfunkgerät in Mobilfunknetzen mit mehreren Frequenzbereichen einsetzbar sein, dann wird das Funkgerät so ausgebildet, daß meherere Hochfrequenzteile vorgesehen sind, von denen jeweils einer durch ungeübte Personen, d.h. den Benutzer ohne Werkzeug in das Funkgerät einsetz- und entnehmbar ist.

Bei dem Mobilfunkgerät kann es sich um ein Funktelefon handeln. Das Gerät kann eine Breitbandantenne oder eine elektronisch oder mechanisch abstimmbare Antenne haben.

## Patentansprüche

1. Rechnergesteuertes Funkteilnehmergerät,
das einen Sender (5) und einen Empfänger (3) hat und
dessen Software in Speicherbausteinen abgespeichert ist,
bei dem zum Betrieb des Funkteilnehmergerätes in Mobilfunknetzen
mit unterschiedlichen Funkschnittstellen zwischen dem Funkteilnehmergerät und dem Mobilfunknetz mehrere Speicherbereiche (10) mit der dem jeweiligen Mobilfunknetz entsprechenden Software (A, B, C, D) vorgesehen
und wahlweise aktivierbar ausgeführt sind und
bei dem eine vom Empfänger (3) des Funkteilnehmergerätes
gesteuerte Auswerteeinrichtung (7) vorgesehen ist, durch die
vor dem Aufbau einer den Qualitätsanforderungen entsprechenden Verbindung das Auswahlkriterium für die Speicherbereiche (10)
aus der Qualität des Kontaktes zum Mobilfunknetz abgeleitet wird
und bei dem, *falls bei einer aktivierten Software (C) der Empfänger (3)*
*eine zu geringe Feldstärke feststellt,* die Auswerteeinrichtung (7) zum Finden
des den Qualitätsanforderungen entsprechenden Mobilfunknetzes *einen Systemsuchlauf durch Weiterschalten in die nächste Software (D)* veranlaßt.

2. Funkteilnehmergerät, nach Anspruch 1, wobei zum Betrieb für mehrere Frequenzbereiche mehrere Hochfrequenzteile vorgesehen sind, von denen jeweils einer durch ungeübte Personen ohne Werkzeug in das Gerät einsetz- und entnehmbar ist.

3. Funkteilnehmergerät nach einem der vorhergehenden Ansprüche, wobei es eine Breitbandantenne oder eine elektronisch oder mechanisch abstimmbare Antenne aufweist.

4. Funkteilnehmergerät nach einen der vorhergehenden Ansprüche, wobei es ein Funktelefon ist.

## Claims

1. Computer-controlled subscriber radio equipment comprising a transmitter (5) and a receiver (3), the software of which is stored in memory components and in which, to operate the subscriber radio equipment in mobile radio networks with different radio interfaces, a plurality of memory areas (1) with software (A, B, C, D) appropriate to the respective mobile radio network and can be selectively activated and in which an evaluating unit (7) is provided, which is controlled by the receiver (3) of the subscriber radio equipment and by which the criterion for selection of the memory areas (10) is derived from the quality of the contact with the mobile radio network before building up a connection corresponding to the quality requirements, and if the field-strength at the receiver (3) is too low while a software (C) is activated, the evaluation unit (7) initiates by switching into the next software (D) a search-routine for finding the mobile radio network corresponding to the quality requirements.

2. Subscriber radio equipment according to claim 1, wherein for operation over a plurality of frequency ranges, a plurality of high-frequency parts are provided, of which one at a time can be inserted into or removed from the equipment without tools and by unskilled persons.

3. Subscriber radio equipment according to one of the proceeding claims and comprising a wide-band aerial or an electronically or mechanically tuneable aerial.

4. Subscriber radio equipment according to one of the proceeding claims, said equipment being a radio telephone.

## Revendications

1. Appareil d'abonné au radio-téléphone qui est commandé par un processeur, ayant un émetteur (5) et un récepteur (3), dont le logiciel est mémorisé dans des modules de mémoire et dans le cas duquel, pour utiliser l'appareil d'abonné au radio-téléphone sur des réseaux de radio-téléphonie mobile à interfaces radio différentes entre l'appareil d'abonné au radio-téléphone et le réseau de téléphonie mobile, plusieurs zones de mémoire (10), sont prévues, contenant les logiciels (A, B, C, D,) correspondant à chaque réseau de radio-téléphonie mobile, et réalisées pour pourvoir être activées sélectivement, et dans les cas duquel est prévu un dispositif de traitement (7) qui est commandé par le récepteur (3) de l'appareil d'abonné au radio-téléphone et au moyen duquel on déduit le critère de sélection des zones de mémoire (10) de la qualité de contact avec le réseau de radio-téléphonie mobile, et dans lequel, si une intensité de champ reçue trop faible est détecté par le récepteur (3) lorsqu'un logiciel (C) est activé, le dispositif de traitement (7) lance une routine de recherche en sélectionnant le logiciel suivant (D) pour trouver le réseau de radio-téléphonie mobile correspondant aux qualités requises.

2. Appareil d'abonné au radio-téléphone selon la revendication 1, dans lequel, pour permettre l'utilisation sur plusieurs plages de fréquence, sont prévues plusieurs pièces haute fréquence dont l'une peut chaque fois être introduite dans l'appareil, et en être enlevée, par des personnes non qualifiées et sans outil.

3. Appareil d'abonné au radio-téléphone selon l'une des revendications précédentes, cet appareil présentant une antenne large bande or une antenne accordable électroniquement ou mécaniquement.

4. Appareil d'abonné au radio-téléphone selon l'une des revendications précédentes, cet appareil étant un radio-téléphone.
